# EUROPÄISCHE PATENTSCHRIFT

(11) **EP 0 491 652 B1**
(45) Veröffentlichungstag und Bekanntmachung des Hinweises auf die Patenterteilung: **20.03.1996**
(21) Anmeldenummer: 91810802.8
(22) Anmeldetag: 18.10.1991
(51) Int. Cl.: F16K 31/02, F15B 13/044

(54) **Vorrichtung zum Verschieben eines Ventilkörpers mit einem Piezoelement an einem Ventil sowie deren Verwendung**
Device for shifting a valve body with a piezoelectric element for a valve and use of it
Dispositif pour déplacer un corps de soupape avec un élément piézoélectrique pour une soupape et application de celui-ci

(30) Priorität: 20.11.1990 CH 3678/90
(43) Veröffentlichungstag der Anmeldung: 24.06.1992
(73) Patentinhaber: AIRMOTEC AG, CH-8308 Illnau (CH)
(72) Erfinder: Behm, Felix, Dr., CH-8600 Dübendorf (CH); Streit, Peter, CH-8335 Hittnau (CH)
(74) Vertreter: Frauenknecht, Alois J.

(56) Entgegenhaltungen:
- GB-A- 2 051 312
- GB-A- 2 094 940
- PATENT ABSTRACTS OF JAPAN vol. 12, no. 352 (M-744)(3199) 21. September 1988 & JP-A-63 111 382 (HITACHI) 16. Mai 1988

## Beschreibung

Die Erfindung betrifft eine Vorrichtung zum Verschieben eines Ventilkörpers mit einem Piezoelement an einem Ventil zur Veränderung der Durchtrittsmenge eines Mediums, mit einer Öffnung, welche einen Ventilsitz aufweist und durch den Ventilkörper verschliessbar ist, wobei dieser aus einer ersten Stellung, in welcher er auf dem Ventilsitz aufliegt, in eine zweite abgehobene Stellung verschiebbar ist mit einem ersten Raum, der sich in Strömungsrichtung vor der Öffnung befindet und mit einem zweiten Raum, der sich in Strömungsrichtung hinter der Öffnung befindet, wobei die beiden Räume durch je eine elastische Membran gasdicht verschlossen sind und sich der Ventilkörper zwischen diesen Membranen befindet, wobei sich das Piezoelement mit seinem einen Ende über eine dieser beiden Membranen auf dem zentralen Ventilkörper abstützt, um beim Anlegen einer Spannung an das Piezoelement diesen Ventilkörper vom Ventilsitz abzuheben.

Ein piezoelektrisches Ventil gemäss dem Oberbegriff des Anspruchs 1 ist bekannt aus der JP -A- 61 111 382. Dabei wirkt ein scheibenartig ausgebildeter Piezokristall auf einen Übertragungszylinder und dieser über eine erste Membrane auf die Spitze eines Kegels, welcher an seiner radialen Mantelfläche auf einem Ventilsitz aufliegt und dessen anschliessendes zylindrisches Teil stirnseitig auf einer bombierten Fläche, auf einer weiteren Membrane aufliegt. Diese zweite Membrane ist von einer Spiralfeder gestützt, welche dadurch die Kegelmantelfläche an den Ventilsitz presst. Beim Anlegen einer geeigneten Spannung biegt sich die Piezokristall-Scheibe durch, die Biegung wird partiell durch den Übertragungszylinder weitergeleitet, sie wirkt über die erste Membrane auf die Spitze des Kegels, sodass der Ventilsitz beim Kegelmantel frei wird und das zu steuernde Medium durchfliessen kann.

Dieses Ventil ist in seiner Kinetik systembedingt nachteilig, da das Piezoelement den Bewegungsablauf nicht linear aktiviert und somit keine genau definierte Hubbewegung erzeugt, insbesondere Spannungsschwankungen. Die Kegelspitze und die erste Membrane sind einer enormen mechanischen Punkt-Belastung ausgesetzt und Verschleissen beim Betrieb vorzeitig; es können im Betrieb auch Wärmedehnungsprobleme auftreten. Im weiteren ist die Herstellung eines solchen Ventils- unwirtschaftlich, ist doch die Abmessung des Ventilkörpers durch die festgelegte Geometrie und Lage des Ventilsitzes überbestimmt und muss in mühsamer Handarbeit an diesen angepasst werden, um übliche Fertigungstoleranzen auszugleichen.

Dieses Ventil lässt sich nicht für anspruchsvolle Anwendungen einsetzen, bei denen ein reproduzierbares, rasches Ansprechverhalten erforderlich ist.

Bei einem weiteren piezolektrischen Ventil (GB -A- 2094 940) ist das Piezoelement zwischen zwei Schrauben gespannt und lässt sich zum Ausgleich von Fertigungstoleranzen durch diese axial verschieben und in seiner Hubbewegung einstellen. Diese Art der Einspannung verursacht in der Kristallstruktur des Elementes asymetrische Verschiebungen, was das Ansprechverhalten beeinträchtigt.

Zur vereinfachten Montage und Wartung wurden auch bereits modular aufgebaute Piezoventile konstruiert (GB -A- 2 051 312).

Bei Treibstoffeinspritzventilen (EP -A2- 0 371 469 und EP-A2- 0 379 182) für Automotoren bestehen grosse Dichtungsprobleme; es sind besondere Rückleitungen für die Leckflüssigkeit notwendig. Solche Lösungen sind bei Ventilen für Gas unzulässig.

Die Aufgabe, welche mit der vorliegenden Erfindung gelöst werden soll, besteht in der Schaffung eines Ventils, welches die Nachteile des Stands der Technik nicht aufweist, das keine Dichtungen zwischen relativ zueinander beweglichen Teilen benötigt und bei dem eine grösstmögliche Dichtung der durch das Ventil strömenden gasförmigen oder flüssigen Medien gewährleistet ist.

Es soll eine trägheitslose Ansteuerung des Piezoelementes mit extrem kurzen Ventileinstellzeiten und eine präzise und reproduzierbare Steuerung des Ventilkörpers mit Frequenzen bis 2,5 kHz möglich sein.

Diese Aufgabe wird durch die Merkmale des Anspruchs 1 gelöst.

Diese Vorrichtung erzielt hohe Schalt- bzw. Regelgeschwindigkeiten bei einem geringen Energiebedarf und lässt sich mit wenigen Bauteilen realisieren.

Vorzugsweise wird, entsprechend Anspruch 2, wenigstens eine Tellerfeder zur Rückstellung des Ventilkörpers vorgesehen, wodurch der Energiebedarf der Vorrichtung nochmals reduziert werden kann.

Vorteilhafterweise bestehen die elastischen Membranen, gemäss Anspruch 3, aus Metall, da Gummimembranen und dgl. für Gase durchlässig sind.

Gemäss Anspruch 4 ist die Fläche, mit welcher der Ventilkörper den Ventilsitz berührt, vorzugsweise kegelförmig ausgebildet, und der Ventilsitz wird durch die Schnittlinie zwischen einer zylindrischen Fläche und einer ebenen Fläche gebildet. Dies hat den Vorteil, dass die Berührungsfläche zwischen Ventilkörper und Ventilsitz möglichst klein ist und eine gute Dichtung gewährleistet.

Das Ventil eignet sich zum Regeln und Steuern von Gas- und Flüssigkeitsströmen. Die Veränderung des Strömungsquerschnittes, d.h. die Verschiebung des Ventilkörpers wird in Öffnungsrichtung ausschliesslich durch das Piezoelement und in Schliessrichtung durch Federkraft bewirkt. Mit der vorliegenden Konstruktion wird erreicht, dass nur wenige Bauteile dem Gas- oder Flüssigkeitsstrom ausgesetzt sind, und dass dank der Verwendung von Metallmembranen, welche über O-Ringe dichtend an einer Gasflussplatte anliegen, eine zuverlässige Dichtung gewährleistet ist.

Der Ventilkörper ist vorteilhafterweise gemäss Anspruch 4 kegelförmig oder er kann sich aus einem zylindrischen und einem kegeligen Teil zusammensetzen. Dadurch ergibt sich eine bessere Regulierbarkeit des Ventils.

Der Ventilkörper ist nach einer anderen Ausführungsform gemäss Anspruch 5 kugelförmig ausgebildet, derart, dass auf dem kreislinienförmigen Ventilsitz statt der Kegelfläche eine Kugeloberfläche aufliegt, die sich leichter genau herstellen lässt.

Gemäss Anspruch 6 weist vorteilhafterweise das Ventil ein Gehäuse, eine Gasflussplatte und einen Ventilkopf auf, wobei die eine Membran zwischen Gehäuse und Gasflussplatte und die andere Membran zwischen Ventilkopf und Gasflussplatte eingeklemmt ist, was einen einfachen Aufbau des Ventils ermöglicht.

Gemäss Anspruch 7 sind vorteilhafterweise die drei Teile, nämlich Gehäuse, Gasflussplatte und Ventilkopf, durch Schrauben miteinander verbunden, um den Aus- und Zusammenbau zu erleichtern.

Zwei Ausführungsbeispiele des erfindungsgemässen Ventils sind im folgenden anhand der beigefügten Zeichnung ausführlich beschrieben.

Es zeigt:
- Fig. 1: einen Schnitt durch ein Stell- und Regelventil
- Fig. 2: einen Schnitt nach Linie II-II in Fig. 1
- Fig. 3: eine schaubildliche Darstellung eines Details und
- Fig. 4: eine schaubildliche Darstellung eines Details gemäss einer zweiten Ausführungsform.

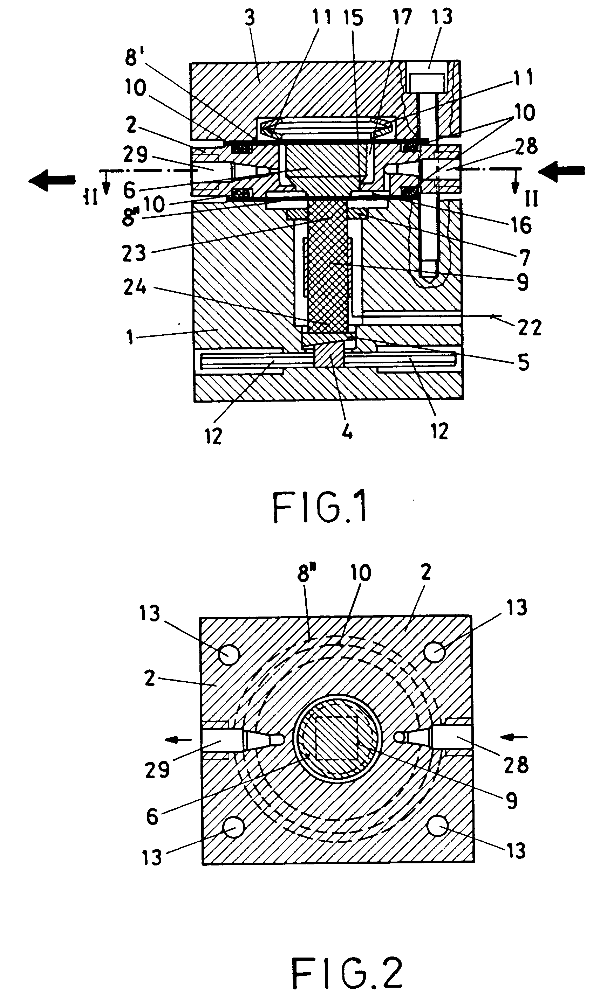

Gemäss Fig. 1 weist das Ventil ein Gehäuse 1 auf, an dem eine Gasflussplatte 2 und ein Ventilkopf 3 mit Hilfe von Schrauben 13 befestigt sind. Zwischen dem Gehäuse 1 und der Gasflussplatte 2 ist eine erste Membran 8′ und zwischen dem Ventilkopf 3 und der Gasflussplatte 2 ist eine zweite Membran 8˝ eingeklemmt. Die obere Membran 8′ ist durch zwei Tellerfedern 11 belastet. Zwei O-Ringe 10 zwischen der Gasflussplatte 2 und den beiden Membranen 8′ und 8˝ gewährleisten, dass die Membranen 8′ und 8˝ dichtend an der Gasflussplatte 2 anliegen. Im Gehäuse 1 befindet sich ein Piezokristall 9, der durch ein Zentrierring 7 an seinem einen Ende 23 gehalten ist und der sich mit seinem anderen Ende 24 auf einem Keil 5 abstützt, der sich seinerseits auf einem zweiten Keil 4 abstützt. Mit Hilfe von Stellschrauben 12 lässt sich der zweite Keil 4 - in Fig. 1 gesehen - nach links und rechts verschieben, wodurch der andere Keil 5 zusammen mit dem Piezokristall 9 in vertikaler Richtung - in Fig. 1 gesehen - verschieben lässt. Das gegenüberliegende Ende 23 des Piezokristalles 9 wird dadurch mehr oder weniger stark gegen die eine Membrane 8˝ angedrückt. Über eine elektrische Leitung 22 kann der Piezokristall 9 in üblicher Weise elektrisch angeregt werden.

In weiteren Zeichnungen sind gleiche Funktionsteile mit gleichen Bezugsziffern bezeichnet.

Gemäss Fig. 2 weist das Piezoelement 9 einen rechteckigen Querschnitt auf. In den vier Ecken des Gehäuses 1 ist je eine Schraube 13 angeordnet.

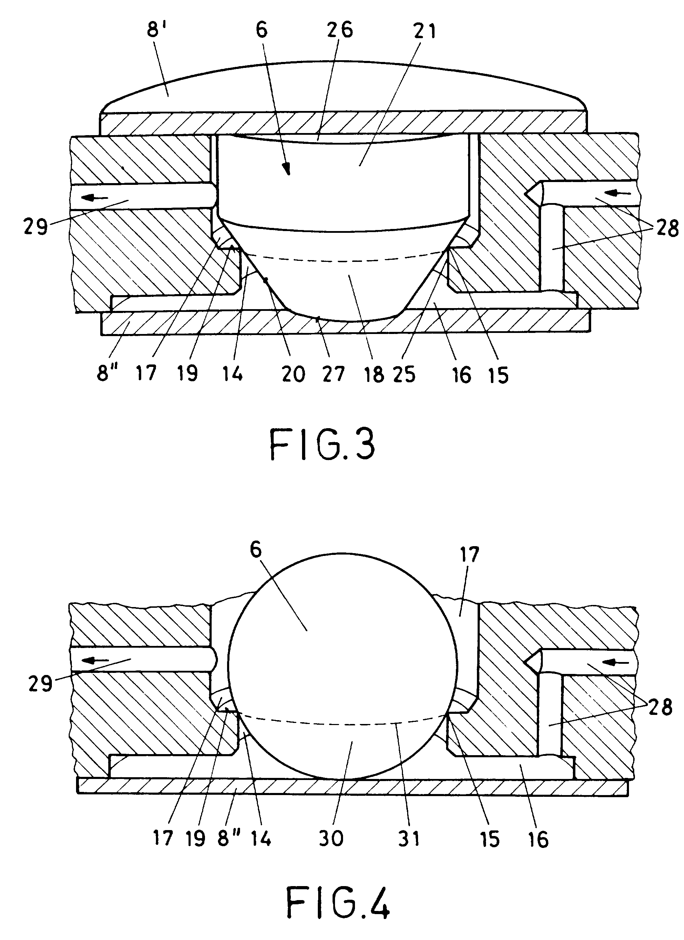

Gemäss Fig. 3 befindet sich zwischen den beiden Membranen 8′ und 8˝ ein Ventilkörper 6, der sich aus einem konischen Teil 20 und aus einem zylindrischen Teil 21 zusammensetzt. Der Ventilkörper 6 liegt einerseits mit seiner oberen Stirnfläche 26 an der einen Membran 8′ und mit seiner unteren Stirnfläche 27 an der anderen Membran 8˝ an. Dieser Ventilkörper 6 befindet sich teilweise in einer ersten zylindrischen Gaskammer 16 und teilweise in einer zweiten zylindrischen Gaskammer 17. Die beiden Gaskammern 16 und 17 sind durch eine Öffnung 14 miteinander verbunden. Der Ventilkörper 6 stützt sich mit seiner kegeligen Fläche 18 auf einem Ventilsitz 15 ab. Der Ventilsitz 15 wird durch die Schnittlinie zwischen einer zylindrischen Fläche 25 und einer ebenen Fläche 19 gebildet. Zur ersten Gaskammer 16 führt eine Zuleitung 28 und an die zweite Gaskammer 17 ist eine Austrittsleitung 29 angeschlossen. Bei geöffnetem Ventil, d.h. wenn der Ventilkörper 6 vom Ventilsitz 15 abgehoben ist, ist die Zufuhrleitung 28 über die Gaskammer 16, die Öffnung 14 und die Gaskammer 17 mit der Austrittsleitung 29 verbunden.

Der Ventilkörper 6 und die Gasflussplatte 2 sind vorzugsweise aus Metall hergestellt. Somit ist auch die kegelige Fläche 18 des Ventilkörpers 6 und der Ventilsitz 15 aus Metall. Dank der grossen Kraft, welche mit dem Piezoelement 9 ausgeübt werden kann, sind nichtmetallische Dichtmaterialien nicht erforderlich, die sich für Gase auch nicht eignen.

Die Rückstellkraft, welche den Ventilkörper 6 in seine geschlossene Ausgangsstellung bewegt, wird durch die obere Metallmembrane 8′ erzeugt. Diese Kraft kann zusätzlich durch die Tellerfedern 11 verstärkt werden. Statt der Tellerfedern 11 eignen sich auch Schrauben- oder Blattfedern.

Die Wirkungweise des beschriebenen Ventils ist wie folgt: So-lange keine Spannung an das Piezoelement 9 gelegt wird, ist das Ventil geschlossen, d.h. durch die Feder 11 wird über die obere Membran 8′ der Ventilkörper 6 mit seiner kegeligen Fläche 18 gegen den Ventilsitz 15 gepresst. Sobald an das Piezoelement über Leitung 22 Spannung angelegt wird, stösst das Piezoelement 9 über die untere Membrane 8˝ gegen den Ventilkörper 6 und hebt die kegelige Fläche 18 vom Ventilsitz 15 ab. Das Gas gelangt aus der Zufuhrleitung 28 in die Gaskammer 16, die Öffnung 14 in die Gaskammer 17 und in die Austrittsleitung 29.

Gemäss Fig. 4 wird statt dem kegeligen Ventilkörper 6 ein kugelförmiger Ventilkörper 6 verwendet, dessen kugelförmige Oberfläche 30 entlang einer Kreislinie 31 auf dem Ventilsitz 15 aufliegt. Dieser kugelförmige Ventilkörper 6 befindet sich ebenfalls zwischen den beiden Metallmembranen 8. Die Wirkungsweise des Ventils mit diesem kugelförmigen Ventilkörper 6 ist im übrigen gleich wie die Wirkungsweise des Ventils mit dem kegeligen Ventilkörper 6.

Die trägheitslose Ansteuerung des Piezoelementes erlaubt extrem kurze Ventileinstellzeiten und eine präzise und reproduzierbare Steuerung des Ventilkörpers mit Frequenzen bis 2,5 kHz.

Das verwendete Piezoelement ist handelsüblich (Firma Tokin Corp; Japan, Typ NLA 5x5x18) und wird mit Spannungen von -100 V bis +100 V aktiviert.

## Patentansprüche

1. Vorrichtung zum Verschieben eines Ventilkörpers (6) mit einem Piezoelement (9) an einem Ventil zur Veränderung der Durchtrittsmenge eines Mediums, mit einer Öffnung (14), welche einen Ventilsitz (15) aufweist und durch den Ventilkörper (6) verschliessbar ist, wobei dieser aus einer ersten Stellung, in welcher er auf dem Ventilsitz (15) aufliegt, in eine zweite abgehobene Stellung verschiebbar ist mit einem ersten Raum (16), der sich in Strömungsrichtung vor der Öffnung (14) befindet und mit einem zweiten Raum (17), der sich in Strömungsrichtung hinter der Öffnung (14) befindet, wobei die beiden Räume (16, 17) durch je eine elastische Membran (8',8") gasdicht verschlossen sind und sich der Ventilkörper (6) zwischen diesen Membranen (8',8") befindet, wobei sich das Piezoelement (9) mit seinem einen Ende (23) über eine dieser beiden Membranen (8',8'') auf dem zentralen Ventilkörper (6) abstützt, um beim Anlegen einer Spannung an das Piezoelement (9) diesen Ventilkörper (6) vom Ventilsitz (15) abzuheben, dadurch gekennzeichnet, dass das Piezoelement (9) stirnseitig direkt an der einen Membran (8") anliegt und längsseitig durch einen peripheren Zentrierring (7) an seinem einen Ende (23) positioniert ist, dass sich das Piezoelement (9) mit seinem andern Ende auf einem Keil (5) abstützt, dessen Lage durch einen zweiten Keil (4) und durch Stellschrauben (12) einstellbar ist.

2. Vorrichtung nach Anspruch 1, dadurch gekennzeichnet, dass wenigstens eine tellerförmige Rückstellfeder (11) vorgesehen ist, welche über die eine Membran (8' oder 8") den Ventilkörper (6) auf den Ventilsitz (15) drückt.

3. Vorrichtung nach Anspruch 1, dadurch gekennzeichnet, dass die elastischen Membranen (8', 8") aus Metall bestehen.

4. Vorrichtung nach Anspruch 1, dadurch gekennzeichnet, dass die Fläche (18), mit welcher der Ventilkörper (6) den Ventilsitz (15) berührt, kegelförmig ausgebildet ist, und dass der Ventilsitz (15) durch die Schnittlinie zwischen einer zylindrischen Fläche (25) und einer ebenen Fläche (19) gebildet wird.

5. Vorrichtung nach Anspruch 1, dadurch gekennzeichnet, dass die Oberfläche (18), mit welcher der Ventilkörper (6) den Ventilsitz (15) berührt, kugelförmig ausgestaltet ist.

6. Vorrichtung nach Anspruch 1, dadurch gekennzeichnet, dass das Ventil ein Gehäuse (1), eine Gasflussplatte (2) und einen Ventilkopf (3) aufweist, die eine Membran (8') zwischen Gehäuse (1) und Gasflussplatte (2) eingeklemmt ist und die andere Membran (8") zwischen Ventilkopf (3) und Gasflussplatte (2) eingeklemmt ist.

7. Vorrichtung nach Anspruch 6, dadurch gekennzeichnet, dass die drei Teile des Ventils, nämlich Gehäuse (1), Gasflussplatte (2) und Ventilkopf (3) durch Schrauben (13) lösbar miteinander verbunden sind.

8. Verwendung der Vorrichtung nach Anspruch 1 zur Steuerung des Trägergasstromes in einem Gaschromatographen.

## Claims

1. A device for moving a valve body (6) with a piezoelectric element (9) at a valve for altering the quantity of a medium passing through, having an opening (14) which has a valve seat (15) and is closable by the valve body (6), the valve body (6) being movable from a first position in which it rests on the valve seat (15) into a second raised position, having a first chamber (16) which is located in front of the opening (14) in the direction of flow and having a second chamber (17) which is located after the opening (14) in the direction of flow, the two chambers (16, 17) each being closed in a gas-tight manner by means of a resilient membrane (8', 8") and the valve body (6) being located between these membranes (8', 8"), one end (23) of the piezoelectric element (9) being supported on the central valve body (6) via one of these two membranes (8', 8") so as to raise this valve body (6) from the valve seat (15) upon application of a voltage to the piezoelectric element (9), characterised in that the front end of the piezoelectric element (9) contacts directly with the one membrane (8") and longitudinally the piezoelectric element (9) is positioned by a peripheral centring ring (7) at one of its ends (23), in that the other end of the piezoelectric element (9) is supported on a wedge (5) whose position is adjustable by a second wedge (4) and by adjusting screws (12).

2. A device in accordance with Claim 1, characterised in that at least one plate-shaped return spring (11) is provided which presses the valve body (6) onto the valve seat (15) via the one membrane (8' or 8").

3. A device in accordance with Claim 1, characterised in that the resilient membranes (8', 8") are composed of metal.

4. A device in accordance with Claim 1, characterised in that the surface (18) by means of which the valve body (6) makes contact with the valve seat (15) is tapered, and in that the valve seat (15) is formed by the intersection between a cylindrical surface (25) and a plane surface (19).

5. A device in accordance with Claim 1, characterised in that the surface (18) by means of which the valve body (6) makes contact with the valve seat (15) is spherical.

6. A device in accordance with Claim 1, characterised in that the valve has a housing (1), a gas flow plate (2) and a valve head (3), the one membrane (8") is clamped between housing (1) and gas flow plate (2) and the other membrane (8') is clamped between valve head (3) and gas flow plate (2).

7. A device in accordance with Claim 6, characterised in that the three parts of the valve, namely housing (1), gas flow plate (2) and valve head (3), are detachably secured to one another by means of screws (13).

8. Utilisation of the device in accordance with Claim 1 for controlling the carrier gas stream in a gas chromatograph.

## Revendications

1. Dispositif de déplacement d'une soupape (6) avec un élément piézoélectrique (9) sur un robinet à soupape pour la modification du débit de passage d'un fluide, comportant une ouverture (14) qui présente un siège (15) et peut être obturée par la soupape (6), celle-ci pouvant être déplacée d'une première position, dans laquelle elle s'appuie sur le siège (15), à une deuxième position levée, une première chambre (14) située en amont de l'ouverture (14) et une deuxième chambre (17) située en aval de l'ouverture (14), ces deux chambres étant fermées chacune de manière étanche aux gaz par une membrane élastique (8', 8") et la soupape (6) se trouvant entre ces membranes (8', 8''), l'élément piézoélectrique (9) s'appuyant à une extrémité (23) sur la soupape centrale (6) par l'intermédiaire d'une première de ces deux membranes (8', 8") afin de soulever cette soupape (6) du siège (15) lors de l'application d'une tension à l'élément piézoélectrique (9), caractérisé en ce que l'élément piézoélectrique (9) s'appuie frontalement directement sur la première membrane (8'') et est, à son extrémité (23), positionné latéralement longitudinalement par un anneau périphérique de centrage (7), et que l'élément piézoélectrique (9) s'appuie à son autre extrémité sur un coin (5) dont la position est réglable au moyen d'un deuxième coin (4) et de vis de réglage (12).

2. Dispositif selon la revendication 1, caractérisé en ce qu'il est prévu au moins un ressort de rappel en forme de rondelle (11) qui serre la soupape (6) sur le siège (15) par l'intermédiaire de la première membrane (8' ou 8").

3. Dispositif selon la revendication 1, caractérisé en ce que les membranes élastiques (8', 8") sont en métal.

4. Dispositif selon la revendication 1, caractérisé en ce que la surface (18) par laquelle la soupape (6) est en contact avec le siège (15) est conique, et que le siège (15) est formé par la ligne d'intersection d'une surface cylindrique (25) et d'une surface plane (19).

5. Dispositif selon la revendication 1, caractérisé en ce que la surface (18) par laquelle la soupape (6) est en contact avec le siège (15) est sphérique.

6. Dispositif selon la revendication 1, caractérisé en ce que le robinet à soupape présente un corps (1), une plaque de circulation de gaz (2) et une tête (3), la première membrane (8") est serrée entre le corps (1) et la plaque de circulation de gaz (2) et l'autre membrane (8') serrée entre la tête (3) et la plaque de circulation de gaz (2).

7. Dispositif selon la revendication 6, caractérisé en ce que les trois parties du robinet à soupape, à savoir le corps (1), la plaque de circulation de gaz (2) et la tête (3), sont assemblées de manière démontable par des vis (13).

8. Utilisation du dispositif selon la revendication 1 pour la commande du courant de gaz porteur dans un appareil de chromatographie en phase gazeuse.
